# EUROPÄISCHE PATENTSCHRIFT

(11) **EP 1 736 640 B1**
(45) Veröffentlichungstag und Bekanntmachung des Hinweises auf die Patenterteilung: **24.01.2018**
(21) Anmeldenummer: 06009714.4
(22) Anmeldetag: 11.05.2006
(51) Int. Cl.: F01L 13/00, F01L 3/06, F02B 37/00, F01L 1/34

(54) **Brennkraftmaschine mit einer Brennstoffeinspritzung direkt in einen Brennraum**
Engine with direct fuel injection in combustion chamber
Moteur à injection directe de carburant dans la chambre de combustion

(30) Priorität: 23.06.2005 DE 102005029077
(43) Veröffentlichungstag der Anmeldung: 27.12.2006
(73) Patentinhaber: Bayerische Motoren Werke Aktiengesellschaft, 80809 München (DE)
(72) Erfinder: Tribulowski, Jan, Dr., 85283 Wolnzach (DE); Dusl, Kurt, 80939 München (DE); Fahl, Thomas, 80802 München (DE); Uhlirsch, Ulrich, 84309 Herrlingen (DE)

(56) Entgegenhaltungen:
- EP-A- 1 195 505
- EP-A- 1 493 908
- DE-A1- 10 342 887
- US-A- 4 285 310
- US-A1- 2001 050 070
- US-A1- 2002 066 434
- US-A1- 2003 159 441
- US-A1- 2005 090 966

## Beschreibung

Die Erfindung betrifft eine Brennkraftmaschine mit einer Brennstoffeinspritzung direkt in einen Brennraum mit den Merkmalen aus dem Oberbegriff des Patentanspruchs 1.

Aus der europäischen Offenlegungsschrift EP 1 493 908 A2 ist eine Brennkraftmaschine mit einer Brennstoffeinspritzung direkt in einen Brennraum der Brennkraftmaschine bekannt. Weiter verfügt die Brennkraftmaschine über eine Aufladevorrichtung, einen Abgasturbolader und weist einen variablen Ventiltrieb für Gaswechselventile zur Veränderung der Steuerzeiten auf. Sowohl für die Einlass-Gaswechselventile als auch die Auslass-Gaswechselventile ist jeweils ein variabler Ventiltrieb vorgesehen mit dem jedoch nur eine Phasenlage der Ventilsteuerzeiten veränderbar ist. Mit der vorgeschlagenen Anordnung ist es möglich, nach einem Kaltstart der Brennkraftmaschine sehr schnell eine gute Abgasreinigung zu erzielen. Ein Raumbrennverfahren, wie z. B. ein HCCI-Brennverfahren (Homogenious charge compression ignition) lässt sich mit der bekannten Brennkraftmaschine jedoch nicht darstellen.

Weiter ist aus der amerikanischen Patentanmeldung US 2001/0050070 A1 eine Otto-Brennkraftmaschine bekannt, die in einem mageren Schichtladebetrieb betreibbar ist. Der Brennstoff kann entweder in den Saugtrakt oder direkt in den Zylinder eingespritzt werden. Für den mageren (λ > 1) Betrieb der Brennkraftmaschine ist eine Abgasrückführeinrichtung vorgesehen. Weiter sind je Zylinder für je ein Einlass- und Auslassventil am Ventilsitz Maskierungen vorgesehen, zur Turbulenzerzeugung im Brennraum. Diese vorgeschlagene Anordnung mit der Abgasrückführeinrichtung dient vor allem dazu, die NOₓ-Emissionen der Brennkraftmaschine zu verringern. Auch mit dieser bekannten Brennkraftmaschine lässt sich kein Raumbrennverfahren, wie z. B. ein HCCI-Brennverfahren, realisieren.

Daher liegt der Erfindung die Aufgabe zugrunde, eine gattungsgemäße Brennkraftmaschine derart weiter zu bilden, dass mit ihr ein Raumbrennverfahren (Homogenious charge compression ignition) darstellbar ist.

Diese Aufgabe wird durch eine gattungsgemäße Brennkraftmaschine mit einer Brennstoffeinspritzung direkt in einen Brennraum mit den Merkmalen aus dem kennzeichnenden Teil des Patentanspruchs 1 gelöst.

Durch die variable Auslasssteuerzeit und den variablen Auslasshub der Auslass-Gaswechselventile lässt sich in Kombination mit der variablen Einlasssteuerzeit und dem variablen Einlasshub der Einlass-Gaswechselventile der Restgasgehalt im Zylinder variabel einstellen. Es ist durch geeignete Einstellung der Gaswechselventil-Steuerzeiten und - hüben eine Restgasfreiheit in den Brennräumen der Brennkraftmaschine möglich. Diese wirkt sich insbesondere im aufgeladenen Zustand der Brennkraftmaschine positiv auf das Klopfverhalten aus, da keine heißen Abgase in den Brennräumen verweilen und diese dadurch kühler bleiben. In vorteilhafter Weise wird weiter durch die freie Einstellung des Restgasgehaltes das HCCI-Brennverfahren (Homogenious charge compression ignition) mit Aufladung möglich.

Weiter kann die Laststeuerung im aufgeladenen Zustand bei konstanter Wastegatestellung über die Variation des Ventilhubs erfolgen. Unter einem Wastegate wird ein Schließmechanismus für einen Bypass einer Turbine einer Aufladevorrichtung, bzw. eines Abgasturboladers verstanden. Dies ermöglicht in bestimmten Betriebszuständen eine Responseverbesserung, z. B. bei einer Lastwegnahme mit sofortigem Beschleunigen. Erfindungsgemäß bleibt die Wastegatestellung unverändert oder wird sogar geschlossen. Die gewünschte Last der Brennkraftmaschine wird über den Ventilhub eingestellt. Da der gesamte Abgasmassenstrom durch die Turbine läuft, fällt die Laderdrehzahl nicht ab. Weiterhin kann der Druck im Saugrohr hoch gehalten werden. Bei steigender Lastanforderung liegt in vorteilhafter Weise sofort, ohne zeitliche Verzögerung, der volle Ladedruck an.

Mit der vorgeschlagenen Maßnahme kann das Brennverhalten im Niedriglastbereich für eine gattungsgemäße Brennkraftmaschine deutlich verbessert werden. Ferner können durch die Brennstoffdirekteinspritzung, vorzugsweise Benzin, in den Brennraum die Freiheitsgrade bezüglich der variablen Ventilsteuerung, Öffnungsdauer und Überschneidung der Gaswechselventile, in Verbindung mit einer aufgeladenen Brennkraftmaschine noch weiter erhöht werden.

Weiter wird die Ladungsbewegung im Brennraum positiv beeinflusst, wodurch insbesondere bei niedrigen Drehzahlen sowie bei niedriger Last das Brennverfahren optimiert ist. Ferner ermöglicht die Erfindung den Einsatz eines Füllungskanals, d. h. eines strömungsoptimierten Einlasskanals, da die für die Verbrennung erforderliche Turbulenz mittels der Maskierung erreicht wird. Der Füllungskanal ermöglicht insbesondere bei hohen spezifischen Leistungen einen guten Wirkungsgrad, einen niedrigen Brennstoffverbrauch und bei aufgeladenen Brennkraftmaschinen einen niedrigen Ladedruckbedarf bei gleicher Leistungsabgabe der Brennkraftmaschine. Dies rührt daher, da die Erzeugung der für die Verbrennung erforderliche Turbulenz und Ladungsbewegung in der Teillast durch die brennraumseitige Maskierung in Verbindung mit den unterschiedlichen Öffnungshubhöhen erreicht wird.
Im aufgeladenen Zustand, beispielsweise mit einem Abgasturbolader, bzw. in der Volllast kann bei erforderlichen Drehzahlen, in der Regel bei niedrigen Drehzahlen, die für die Verbrennung erforderliche Turbulenz durch die unterschiedlichen Öffnungshübe der Gaswechselventile erzeugt werden. Bei Betriebspunkten, in denen die hohe Turbulenz nicht erforderlich ist, werden die Gaswechselventile voll, d. h. maximal geöffnet und es ergibt sich durch die Verwendung eines Füllungskanals die maximale Zylinderfüllung bei geringster Ladungswechselarbeit.

Erfindungsgemäß wird eine Brennkraftmaschine vorgeschlagen, die gleichzeitig über folgende Merkmale verfügt:
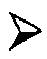 Direkte Brennstoffeinspritzung in den Brennraum,
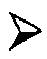 Aufladevorrichtung,
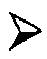 Variabler Ventiltrieb zur Veränderung der Steuerzeiten,
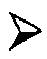 Variabler Ventiltrieb zur Veränderung der Öffnungsdauer zumindest der Einlass-Gaswechselventile.

Bei der vorgeschlagenen Brennstoffeinspritzung kann es sich beispielsweise um ein common-rail-System handeln oder ein anderes Hochdruckeinspritzsystem wie sie heute bereits bei selbstzündenden und fremd gezündeten Brennkraftmaschinen eingesetzt werden.

Bei der Aufladevorrichtung handelt es sich beispielsweise um einen einzigen Abgasturbolader, es kann jedoch auch eine Stufen-, oder Parallelaufladung mit mehreren Abgasturboladern oder auch eine mechanische Aufladung vorgesehen werden.

Ferner weist der Ventiltrieb eine Vorrichtung auf, mit der die relative Phasenlage von zumindest der Einlass-Nockenwelle zur Kurbelwelle verstellbar ist. Erfindungsgemäß wird neben dieser Phasenverstellung vom Ventiltrieb auch die Öffnungsdauer der Gaswechselventile verändert. In einer weiteren vorteilhaften Ausgestaltung ist neben der Öffnungsdauer auch die Hubhöhe der Einlass-Gaswechselventile veränderbar. Diese Variabilität kann beispielsweise durch rein mechanische oder hydraulische oder elektromechanische Ventiltriebe erzielt werden.

In einer weiteren vorteilhaften Ausgestaltung weist die Brennkraftmaschine je Zylinder zwei Einlass-Gaswechselventile auf, wobei zumindest ein Ventilsitz eine brennraumseitige Maskierung aufweist. Mit Hilfe dieser Maßnahme ist im Brennraum eine Drall- bzw. Tumbleströmung einstellbar, die das Brennverhalten insbesondere bei niedriger Last verbessert. Diese Verbesserung wird darüber hinaus nochmals verbessert, wenn die Einlass-Gaswechselventile eines Zylinders voneinander unterschiedliche Öffnungshubhöhen aufweisen. Durch diese Maßnahme wird in vorteilhafter Weise eine Drallströmung eingestellt. Eine weitere Maßnahme, die Drallströmung im Brennraum zu beeinflussen besteht darin, für die Einlass-Gaswechselventile eines Zylinders unterschiedliche Hubkurven vorzusehen. Selbstverständlich kann die erfindungsgemäße Ausgestaltung sowohl auf der Einlass- als auch Auslassseite der Brennkraftmaschine vorgesehen werden.

Durch die erfindungsgemäße Kombination kann folgendes erreicht werden:
- Ermittlung der maximalen Potentiale hinsichtlich Verbrauch und Leistung durch Variation von zumindest der Öffnungsdauer der Einlass-Gaswechselventile, sowie der Steuerzeiten der Gaswechselventile zwischen minimalen Werten für guten Verbrauch und maximalen Werten für höchste Leistung;
- Durch die Variation des Ventilhubes lässt sich bei konstanter Last und Füllung der Ladedruckbedarf bzw. der Aufladegrad der Brennkraftmaschine frei wählen. Somit kann der Betriebspunkt der Aufladevorrichtung im Verdichterkennfeld verschoben werden, z. B. auf den optimalen Verdichterwirkungsgrad. Dies wirkt sich bei Lastwechseln positiv auf das tränsiente Verhalten der Brennkraftmaschine aus;
- Durch Wahl eines geeigneten Einlasskanals kann über den entsprechend gewählten Ventilhub das Drall- oder Turbulenzniveau im Brennraum bestimmt werden;
- Durch entsprechende Maßnahmen wie Maskierung zumindest eines Einlass-Gaswechselventilsitzes, sowie die Durchführung unterschiedlicher Öffnungshübe zumindest für die Einlass-Gaswechselventile kann in Verbindung mit einem vollvariablen Ventiltrieb bei einer aufgeladenen Brennkraftmaschine das Brennverhalten im Niedriglastbereich deutlich verbessert werden;
- Durch die Brennstoffdirekteinspritzung können die Freiheitsgrade bezüglich der Steuerung des vollvariablen Ventiltriebes, der Nockenwellenphasenverstellung in Verbindung mit einer aufgeladenen Brennkraftmaschine noch weiter erhöht werden
- Durch die Brennstoffdirekteinspritzung kann ferner im aufgeladenen Zustand eine Innenkühlung des Brennstoff/Luft-Gemisches erfolgen, d. h. eine "Anfettung" (Kühlung der Brennräume mit Brennstoff) ist nicht nötig, wodurch Brennstoff eingespart wird;
- Die Laststeuerung kann im aufgeladenen Zustand bei konstanter Wastegatestellung über eine Variation des Ventilhubs erfolgen. Dies ermöglicht in bestimmten Betriebszuständen eine Responseverbesserung, z. B. bei einer Lastwegnahme mit sofortigem Beschleunigen. Bisher: Das Wastegate wird geöffnet, die Turbinendrehzahl und somit der Ladedruck fallen ab. Beim anschließenden Beschleunigen muss erst das Wastegate wieder geschlossen und der Ladedruck aufgebaut werden.
   Erfindungsgemäß bleibt die Wastegatestellung unverändert oder wird sogar geschlossen. Die gewünschte Last der Brennkraftmaschine wird über den Ventilhub eingestellt. Da der gesamte Abgasmassenstrom durch die Turbine läuft, fällt die Laderdrehzahl nicht ab. Weiterhin kann der Druck im Saugrohr hoch gehalten werden. Bei steigender Lastanforderung liegt in vorteilhafter Weise sofort, ohne zeitliche Verzögerung (Turboloch), der volle Ladedruck an;
- Durch die variable Auslasssteuerzeit und -hub der Auslass-Gaswechselventile lässt sich in Kombination mit der variablen Einlasssteuerzeit und - hub der Einlass-Gaswechselventile der Restgasgehalt im Zylinder variabel einstellen. Es ist durch geeignete Einstellung der Gaswechselventil-Steuerzeiten und - hübe eine Restgasfreiheit in den Brennräumen der Brennkraftmaschine möglich. Diese wirkt sich insbesondere im aufgeladenen Zustand der Brennkraftmaschine positiv auf das Klopfverhalten aus, da keine heißen Abgase in den Brennräumen verweilen und diese dadurch kühler bleiben. In vorteilhafter Weise wird weiter durch die freie Einstellung des Restgasgehaltes im Brennraum das HCCI-Brennverfahren (Homogenious charge compression ignition) mit Aufladung möglich. Selbstverständlich braucht die Brennkraftmaschine nicht aufgeladen zu sein, um die genannten Vorteile zu erzielen. Ferner kann mit der vorgeschlagenen Ausgestaltung die Verdichtungsanfangstemperatur positiv beeinflusst werden.

## Patentansprüche

1. Brennkraftmaschine mit einer Brennstoffeinspritzung direkt in einen Brennraum der Brennkraftmaschine, mit einer Aufladevorrichtung und mit einem variablen Ventiltrieb für Gaswechselventile zur Veränderung der Steuerzeiten zumindest der Einlass-Gaswechsel-ventile, wobei die Brennkraftmaschine einlassseitig und auslassseitig einen hub- und zeitvariablen Ventiltrieb aufweist wobei eine Öffnungsdauer zumindest der Einlass-Gaswechselventile und eine Hubhöhe zumindest der Einlass-Gaswechselventile veränderbar ist und wobei die Brennkraftmaschine einen Bypass für eine Turbine der Aufladevorrichtung aufweist und die Aufladevorrichtung ein Wastegate aufweist, **dadurch gekennzeichnet, dass** ein Ladedruck bei konstanter Last der Brennkraftmaschine durch Variation des Einlass-Gaswechsel-Ventilhubes einstellbar ist und zumindest für die Einlass-Gas-wechselventile eines Zylinders unterschiedliche Hubkurven vorgesehen sind und ein Restgasgehalt in einem Brennraum der Brennkraftmaschine über eine Hub- und/oder Zeitvariation der Auslass-Gaswechselventile erfolgt.

2. Brennkraftmaschine nach Patentanspruch 1,
**dadurch gekennzeichnet, dass** eine Laststeuerung bei einer konstanten Wastegatestellung über eine Einlass-Gaswechsel-Ventilhubsteuerung erfolgt.

3. Brennkraftmaschine nach Patentanspruch 1 oder 2,
**dadurch gekennzeichnet, dass** zumindest für die Einlass-Gaswechselventile eines Zylinders unterschiedliche Öffnungshubhöhen vorgesehen sind.

4. Brennkraftmaschine nach einem der Patentansprüche 1 bis 3,
**dadurch gekennzeichnet, dass** ein Zylinder der Brennkraftmaschine zwei Einlass-Gaswechselventile mit jeweils einem Ventilsitz aufweist und an zumindest einem Ventilsitz eine Maskierung angeordnet ist.

## Claims

1. An internal combustion engine with fuel injection directly into a combustion chamber of the internal combustion engine, having a charging device and having a variable valve train for gas exchange valves for changing the timing of at least the intake gas exchange valves, wherein the internal combustion engine has on the intake side and on the exhaust side a valve train of variable lift and timing, wherein an opening time at least of the intake gas exchange valves and a lift height at least of the intake gas exchange valves is changeable, and wherein the internal combustion engine has a bypass for a turbine of the charging device and the charging device has a wastegate, **characterised in that** a boost pressure can be set by varying the intake gas exchange valve lift with a constant load of the internal combustion engine, and different lifting curves are provided at least for the intake gas exchange valves of a cylinder, and a residual gas content in a combustion chamber of the internal combustion engine takes place by means of varying the lift and/or timing of the exhaust gas exchange valves.

2. An internal combustion engine according to Claim 1,
**characterised in that** a load control takes place with a constant wastegate position by means of an intake gas exchange valve lift control.

3. An internal combustion engine according to Claim 1 or Claim 2,
**characterised in that** different opening lifting heights are provided at least for the intake gas exchange valves of a cylinder.

4. An internal combustion engine according to one of Claims 1 to 3,
**characterised in that** a cylinder of the internal combustion engine has two intake gas exchange valves with one valve seat in each case, and a mask is arranged on at least one valve seat.

## Revendications

1. Moteur à combustion interne à injection directe de carburant dans une chambre de combustion de ce moteur, comprenant un dispositif de suralimentation et une commande variable de soupapes permettant de modifier les temps de commande d'au moins les soupapes d'admission, le moteur à combustion interne comportant, côté admission et côté échappement une commande permettant de faire varier la course et la chronologie d'actionnement des soupapes, la durée d'ouverture et la course d'au moins les soupapes d'admission pouvant être modifiées, et le moteur à combustion interne comprenant une dérivation pour la turbine d'un dispositif de suralimentation et la dispositif de suralimentation comportant un limiteur de pression de suralimentation,
**caractérisé en ce que**
la pression de suralimentation à charge constante du moteur peut être réglée par variation de la course des soupapes d'admission, et, au moins pour les soupapes d'admission d'un cylindre, il est prévu différentes cames de levage, et une teneur en gaz résiduel dans une chambre de combustion du moteur à combustion interne résulte d'une variation de course et/ou de la chronologie d'actionnement des soupapes d'échappement.

2. Moteur à combustion interne conforme à la revendication 1,
**caractérisé en ce que**
pour une position constante du limiteur de pression de suralimentation la commande de la charge résulte de la commande de la course des soupapes d'admission.

3. Moteur à combustion interne conforme à la revendication 1 ou 2,
**caractérisé en ce qu'**
au moins pour les soupapes d'admission d'un cylindre, il est prévu différentes valeurs de course d'ouverture.

4. Moteur à combustion interne conforme à l'une des revendications 1 à 3,
**caractérisé en ce qu'**
un cylindre du moteur à combustion interne comporte deux soupapes d'admission ayant chacune un siège de soupape, et un masquage est monté sur au moins un siège de soupape.
